# EUROPEAN PATENT SPECIFICATION

(11) **EP 3 213 197 B1**
(45) Date of publication and mention of the grant of the patent: **23.06.2021**
(21) Application number: 15855125.9
(22) Date of filing: 27.10.2015
(51) Int. Cl.: G06F 8/65, G06F 9/445, G06Q 30/06

(54) **INFORMATION PROCESSING SYSTEM, INFORMATION PROCESSING DEVICE, AND INFORMATION PROCESSING METHOD**
INFORMATIONSVERARBEITUNGSSYSTEM, INFORMATIONSVERARBEITUNGSVORRICHTUNG UND INFORMATIONSVERARBEITUNGSVERFAHREN
SYSTÈME, DISPOSITIF ET PROCÉDÉ DE TRAITEMENT D'INFORMATIONS

(30) Priority: 28.10.2014 JP 2014218991
(43) Date of publication of application: 06.09.2017
(73) Proprietor: Ricoh Company, Ltd., Tokyo 143-8555 (JP)
(72) Inventor: HAN, Xiaofeng, Tokyo 143-8555 (JP)
(74) Representative: SSM Sandmair
(86) International application number: PCT/JP2015/005397
(87) International publication number: WO 2016/067601

(56) References cited:
- US-A1- 2008 005 029
- US-A1- 2008 244 057
- US-A1- 2011 286 044
- US-A1- 2011 286 044

## Description

### [Technical Field]

The present invention relates to an information processing system, an information processing device, and an information processing method.

### [Background Art]

In recent years, various communication apparatuses represented by a mobile phone and an information portable terminal have been widely used. Therefore, an application which can be used in the communication apparatus has been actively developed. In order to promote use of the application, a Web site and an application which can introduce the application and download and install it to the communication apparatus have also been developed.

For example, in Patent Literature 1, an application explaining page on which a download button (virtual button) used for requesting to download the application is displayed is provided from a server to a computer device (client device) every applications held by the server, and is displayed on a display unit of the computer device. Patent Literature 1 discloses a technique in which when the download button of the application explaining page is selected, and only in a case where the selected application is being supported by the computer device, the download is allowed.

US 2011/0286044 A1 discloses an information distributing apparatus that obtains a serial number input from the image forming apparatus and information regarding an apparatus connected to the image forming apparatus. The information distributing apparatus determines permission or inhibition of distribution with respect to each program specified by the serial number.

US 2008/0244057 A1 discloses A management server transmits information representing a list of additional applications installable on an image forming apparatus 202 to the image forming apparatus 202. When an application is selected from the list and an instruction to execute the application is issued, a request for installation is issued to the management server if the application has not been installed. The management server installs the requested application on the image forming apparatus if the management server has a license for the requested application and the application can be installed.

US 2008/005029 discloses a management server which transmits information representing a list of additional applications installable on an image forming apparatus to the said apparatus. When an application is selected from the list and an instruction to execute the application is issued, a request for installation is issued to the management server if the application has not been installed. The management server installs the requested application on the image forming apparatus if the management server has a license for the requested application and the application can be installed. On the other hand, if the application cannot be installed because of insufficient resources, a resource is freed up by flushing and then the application is installed.

### [Summary of Invention]

### [Technical Problem]

However, the application explaining page is not created taking device information of each client device (information relating to a device performance, in other words, information to uniquely specify the client device) into consideration. Therefore, a case may occur in which the download is not allowed even when the user selects the application to be download from the application explaining page. Accordingly, there is a problem in that convenience of the user is deteriorated.

### [Solution to Problem]

The present invention has been made to solve the problem described above. The invention is defined by the independent claims. Dependent claims disclose preferred embodiments of the invention.

### Advantageous Effects of Invention

According to the present invention, the convenience of the user can be improved.

### Brief Description of Drawings

[fig.1]Fig. 1 is a diagram of an example of outline structure of an information processing system.
[fig.2]Fig. 2 is a diagram of an example of hardware configuration of an MFP.
[fig.3]Fig. 3 is a diagram of an example of software configuration of the MFP.
[fig.4]Fig. 4 is a diagram of an example of function configuration of the MFP.
[fig.5]Fig. 5 is a diagram of an example of operation screen.
[fig.6]Fig. 6 is a diagram of an example of function configuration of an application store server.
[fig.7]Fig. 7 is a diagram of an example of function configuration of an apparatus management server.
[fig.8]Fig. 8 is a diagram of an example of second correspondence information.
[fig.9]Fig. 9 is a diagram of an example of apparatus specifying information.
[fig.10]Fig. 10 is a diagram of an example of third correspondence information.
[fig.11]Fig. 11 is a diagram of an example of application store.
[fig.12]Fig. 12 is a diagram of another example of the application store.
[fig.13]Fig. 13 is a sequence diagram of an example of operation procedure of an information processing system.
[fig.14]Fig. 14 is a diagram of an example of outline structure of an information processing system of a modification.
[fig.15]Fig. 15 is a diagram of an example of function configuration of an integrated server.
[fig.16]Fig. 16 is a diagram of example of first correspondence information.

### Description of Embodiments

An embodiment of an information processing system, an information processing device, and an information processing method according to the present invention will be described in detail below with reference to the drawings. In the following description, a multifunction peripheral (MFP) which is an example of an image forming apparatus will be described as an example of an apparatus recited in claims. However, the apparatus is not limited to this and may be a projector, for example. The multifunction peripheral is an apparatus having a plurality of different functions such as a copy function, a scanner function, a print function, and a FAX function.

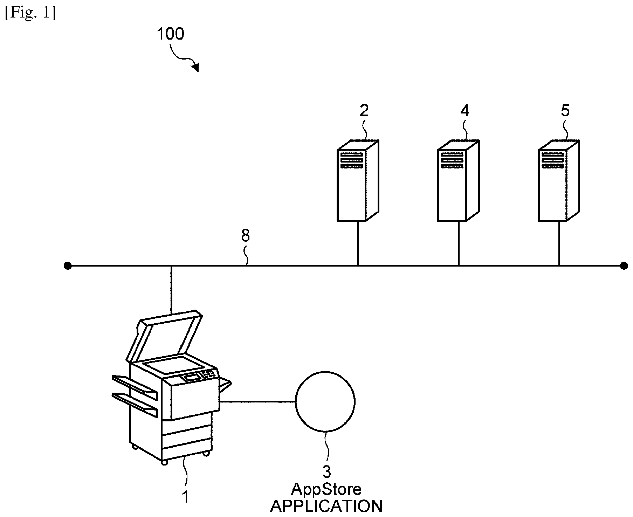

FIG. 1 is a diagram of an example of outline structure of an information processing system 100 according to the present embodiment. As illustrated in FIG. 1, the information processing system 100 includes an MFP 1, an application store server 2, a translation server 4, and an apparatus management server 5 which are connected to each other via a network 8. For convenience of description, a single MFP 1 is exemplified as an apparatus included in the information processing system 100 in the example in FIG. 1. However, the apparatus included in the information processing system 100 is not limited to this, and the number and kind of the apparatus can be optionally selected.

The application store server 2 provides a Web page to display a list of applications available to the MFP 1 and to make a service contract with and download the applications, that is, a Web page (referred to as "application store 6" hereinafter) to provide the application available to the MFP 1 for the MFP 1. A more specific content will be described hereinafter. In this example, the application store 6 corresponds to an "application list screen" in claims. In this example, an application (referred to as "AppStore application 3" hereinafter) for obtaining the application store 6 from the application store server 2 and displaying it on the MFP 1 and an application (referred to as a "browser application 2b" hereinafter) to provide a function of a Web browser have been installed to the MFP 1. A more specific content of the MFP 1 will be described hereinafter.

The application store server 2 manages, for each piece of shop identification information for identifying a shop for selling an apparatus such as the MFP1, a piece(s) of application identifying information for identifying an application(s) in association with each other. A more specific content will be described hereinafter.

The translation server 4 provides a translation application which is one of the applications provided by the application store 6. A more specific content will be described hereinafter.

The apparatus management server 5 manages, for each piece of shop identifying information, a piece(s) of apparatus specifying information for uniquely specifying an apparatus(es) such as the MFP 1 in association with each other. A more specific content will be described hereinafter.

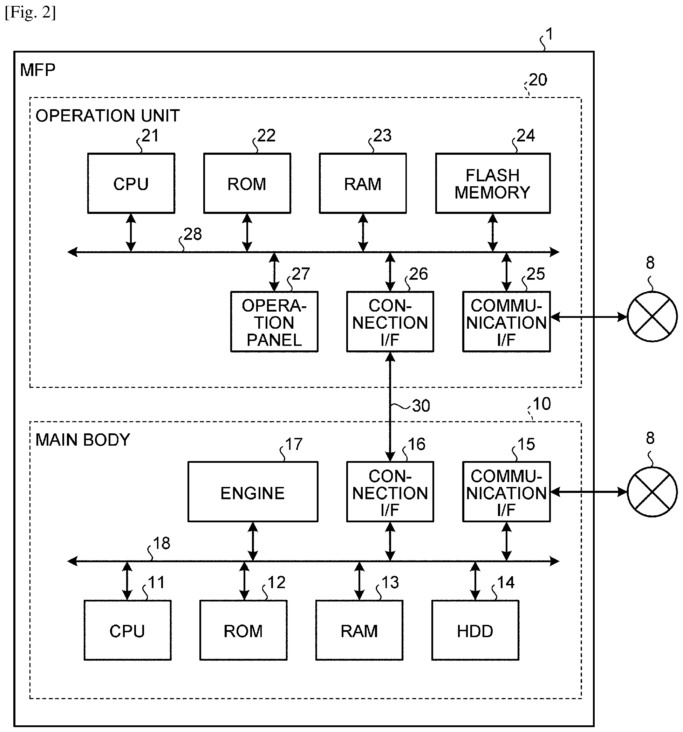

Next, a hardware configuration of the MFP 1 will be described with reference to FIG. 2. As illustrated in FIG. 2, the MFP 1 includes a main body 10 and an operation unit 20 which receives an operation by the user. The main body 10 can implement various functions such as the copy function, the scanner function, the FAX function, and the printer function. The reception of the operation by the user is a concept including the reception of information input according to the operation by the user (including a signal and the like indicating a coordinate value of the screen). The main body 10 and the operation unit 20 are connected to each other via an exclusive communication path 30 so as to communicate with each other. For example, the communication path 30 of a universal serial bus (USB) standard can be used. However, the communication path 30 may be a communication path of any standards regardless of wired or wireless connection.

The main body 10 can operate according to the operation received by the operation unit 20. The main body 10 can communicate with an external device such as a client PC (personal computer) and can operate according to an instruction received from the external device.

First, a hardware configuration of the main body 10 will be described. As illustrated in FIG. 2, the main body 10 includes a CPU 11, a ROM 12, a RAM 13, a hard disk drive (HDD) 14, a communication interface (I/F) 15, a connection I/F 16, and an engine 17. These are connected to each other via a system bus 18.

The CPU 11 totally controls the operation of the main body 10. The CPU 11 controls the operation of the whole main body 10 by executing a computer program stored in the ROM 12, the HDD 14, or the like while using the RAM 13 as a work area (work region). Then, the CPU 11 implements various functions such as the copy function, the scanner function, the FAX function, and the printer function.

The communication I/F 15 is an interface to connect to the network 8. The connection I/F 16 is an interface to communicate with the operation unit 20 via the communication path 30.

The engine 17 is hardware which performs processing other than general information processing and communication to implement the copy function, the scanner function, the FAX function, and the printer function. For example, the engine 17 includes a scanner (image reader) for reading an image of the document by scanning it, a plotter (image forming unit) for printing the image on a sheet material such as paper, and a facsimile for performing fax communication. In addition, the engine 17 can include a specific option such as a finisher for sorting the printed sheet materials and an automatic document feeding device (ADF) for automatically feeding the documents.

Next, a hardware configuration of the operation unit 20 will be described. As illustrated in FIG. 2, the operation unit 20 includes a CPU 21, a ROM 22, a RAM 23, a flash memory 24, a communication I/F 25, a connection I/F 26, and an operation panel 27. These are connected to each other via a system bus 28.

The CPU 21 totally controls the operation of the operation unit 20. The CPU 21 controls the operation of the whole operation unit 20 by executing a computer program stored in the ROM 22, the flash memory 24, or the like while using the RAM 23 as a work area (work region). Then, the CPU 21 implements various functions to be described hereinafter such as displaying of information (image) according to the input received from the user.

The communication I/F 25 is an interface to connect to the network 8. The connection I/F 26 is an interface to communicate to the main body 10 via the communication path 30.

The operation panel 27 receives various inputs according to the operation by the user and displays various types of information (for example, information according to the received operation, information indicating operation condition of the MFP 1, and information indicating a setting state). In this example, the operation panel 27 is configured of a liquid crystal display device (LCD) having a touch panel function mounted therein. However, the operation panel 27 is not limited to this. For example, the operation panel 27 may be configured of an organic EL display having the touch panel function mounted therein. In addition to this or instead of this, an operation unit such as a hardware key and a display unit such as a lamp can be provided.

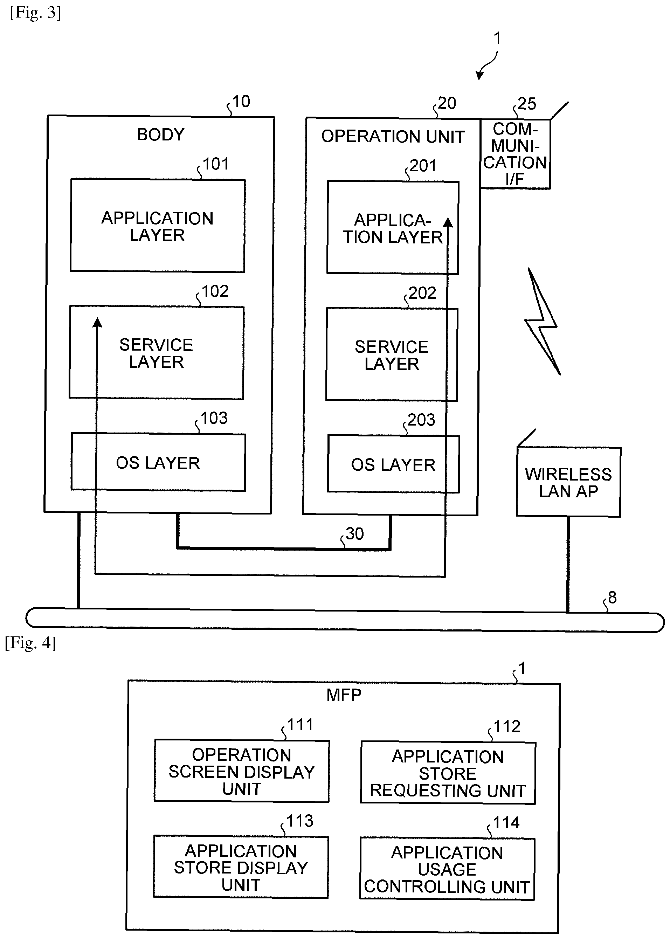

Next, a software configuration of the MFP 1 will be described. FIG. 3 is a schematic diagram of an example of software configuration of the MFP 1. As illustrated in FIG. 3, the main body 10 includes an application layer 101, a service layer 102, and an OS layer 103. Entities of the application layer 101, the service layer 102, and the OS layer 103 are various types of software stored in the ROM 12, the HDD 14, and the like. The CPU 11 executes these types of software so as to provide various functions.

The software of the application layer 101 is an application software (may be simply referred to as "application" hereinafter) to operate hardware resources and provide a predetermined function. For example, as the application, a copy application to provide the copy function, a scanner application to provide the scanner function, a FAX application to provide the FAX function, and a printer application to provide the printer function are exemplified.

The software of the service layer 102 is provided between the application layer 101 and the OS layer 103 and provides an interface to use the hardware resources included in the main body 10 for the application. More specifically, the software of the service layer 102 is software to provide a function to receive an operation request to the hardware resource and arbitrate the operation request. Requests to read by the scanner and to print by the plotter can be considered as the operation request received by the service layer 102.

The function of the interface by the service layer 102 is provided not only to the application layer 101 of the main body 10 but also an application layer 201 of the operation unit 20. That is, the application layer 201 (application) of the operation unit 20 can also implement the function by using the hardware resources of the main body 10 (for example, engine 17) through the interface function of the service layer 102.

The software of the OS layer 103 is basic software (operating system (OS)) to provide a basic function for controlling the hardware included in the main body 10. The software of the service layer 102 converts a request to use the hardware resource from various applications into a command, which can be interpreted by the OS layer 103, and transmits it to the OS layer 103. The software of the OS layer 103 executes the command so that the hardware resource performs the operation according to the request from the application.

Similarly, the operation unit 20 includes the application layer 201, a service layer 202, and an OS layer 203. The application layer 201, the service layer 202, and the OS layer 203 included in the operation unit 20 have a layered structure similar to that of the main body 10. However, a function provided by the application of the application layer 201 and a kind of the operation request which can be received by the service layer 202 are different from those of the main body 10. The application of the application layer 201 may be software to operate the hardware resource included in the operation unit 20 and provide a predetermined function. However, the application of the application layer 201 is software which mainly provides a function of a user interface (UI) to perform operation and display regarding the functions (copy function, scanner function, FAX function, and printer function) of the main body 10. The application of the application layer 201 includes a browser application 2b, the AppStore application 3, and the like.

In the present embodiment, in order to maintain independence of the function, the software of the OS layer 103 of the main body 10 is different from that of the OS layer 203 of the operation unit 20. That is, the main body 10 and the operation unit 20 independently operate by using different operating systems. For example, it is possible to use the Linux (registered trademark) as the software of the OS layer 103 of the main body 10 and use the Android (registered trademark) as the software of the OS layer 203 of the operation unit 20.

As described above, in the MFP 1 according to the present embodiment, the main body 10 and the operation unit 20 operate by using different operating systems. Therefore, communication between the main body 10 and the operation unit 20 is performed not as inter-process communication in a common device but as communication between different devices. This includes operation to transmit the information received by the operation unit 20 (instruction content from user) to the main body 10 (command communication), operation to inform the operation unit 20 of an event by the main body 10, and the like. Here, the operation unit 20 performs the command communication with the main body 10, and accordingly, the function of the main body 10 can be used. As the event informed from the main body 10 to the operation unit 20, an execution state of the operation of the main body 10, a content set to the main body 10, and the like can be exemplified.

In the present embodiment, since the power is supplied from the main body 10 to the operation unit 20 via the communication path 30, power supply control of the operation unit 20 can be separately (independently) performed from that of the main body 10.

Next, a function configuration of the MFP 1 will be described. FIG. 4 is a block diagram of an example of function configuration of the MFP 1. As illustrated in FIG. 4, the MFP 1 includes an operation screen display unit 111, an application store requesting unit 112, an application store display unit 113, and an application usage controlling unit 114. For convenience of description, FIG. 4 mainly illustrates functions according to the present invention; however, the function of the MFP 1 is not limited to these.

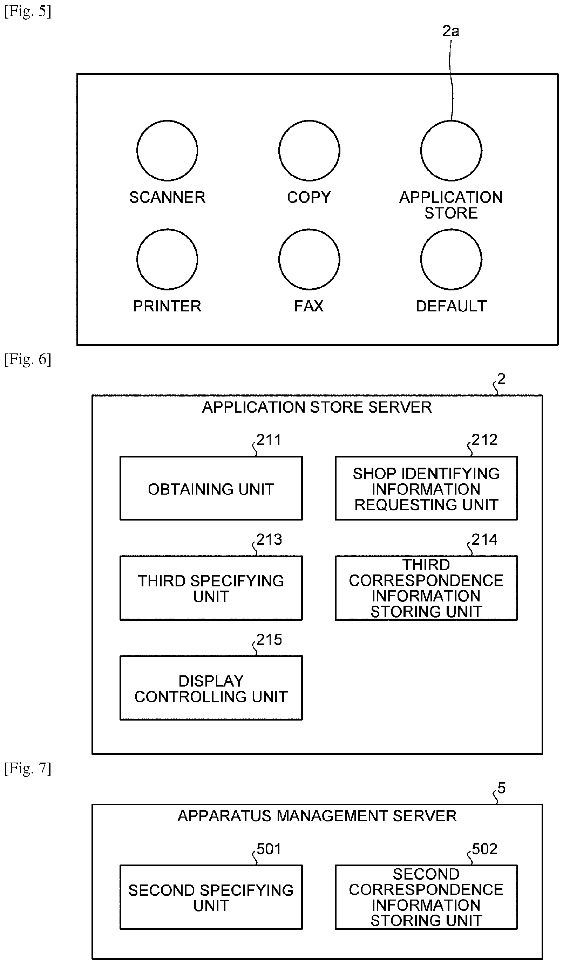

The operation screen display unit 111 performs control to display an operation screen, to perform various operations, on the operation panel 27. FIG. 5 is a diagram of an example of operation screen. An icon 2a to start the AppStore application 3 is displayed on the operation screen.

When a user touches the icon 2a, the AppStore application 3 is started. Then, the AppStore application 3 (application store requesting unit 112) performs control to request the application store server 2 to display the application store 6. A more specific content will be described hereinafter. However, the apparatus specifying information which can uniquely specify the MFP 1 is added to a header of a signal for requesting the display of the application store 6 (may be referred to as "display request" below).

The application store display unit 113 (browser application 2b) performs control to display the application store 6, which is received from the application store server 2 as a response to the display request, on the operation panel 27. The application usage controlling unit 114 performs control to use the application, which has been selected by the user from among the applications displayed on the application store 6, by the MFP 1 (including control to install the application). A more specific operation of the MFP 1 will be described hereinafter.

Next, a function configuration of the application store server 2 will be described with reference to FIG. 6. As illustrated in FIG. 6, the application store server 2 includes an obtaining unit 211, a shop identifying information requesting unit 212, a third specifying unit 213, a third correspondence information storing unit 214, and a display controlling unit 215. For convenience of description, FIG. 6 mainly illustrates the functions according to the present invention; however, the functions of the application store server 2 are not limited to these.

The obtaining unit 211 obtains the display request from the MFP 1. In this example, the apparatus specifying information is added to the header of the display request. Therefore, by obtaining the display request, the obtaining unit 211 can obtain the apparatus specifying information which can uniquely specify the MFP 1 which is a requester of the display request. In this example, the obtaining unit 211 corresponds to an "obtaining unit" in claims.

The shop identifying information requesting unit 212 requests the shop identifying information associated with the apparatus specifying information obtained by the obtaining unit 211 for the apparatus management server 5. In the present embodiment, the shop identifying information requesting unit 212 transmits a signal for requesting the shop identifying information (may be referred to as "shop identifying information request" hereinafter) to the apparatus management server 5 and receives the shop identifying information from the apparatus management server 5 as a response to the signal. In this example, the apparatus specifying information obtained by the obtaining unit 211 is added to the header of the shop identifying information request.

Here, a function configuration of the apparatus management server 5 will be described with reference to FIG. 7. As illustrated in FIG. 7, the apparatus management server 5 includes a second specifying unit 501 and a second correspondence information storing unit 502. For convenience of description, FIG. 7 mainly illustrates the functions according to the present invention; however, the functions of the apparatus management server 5 are not limited to these.

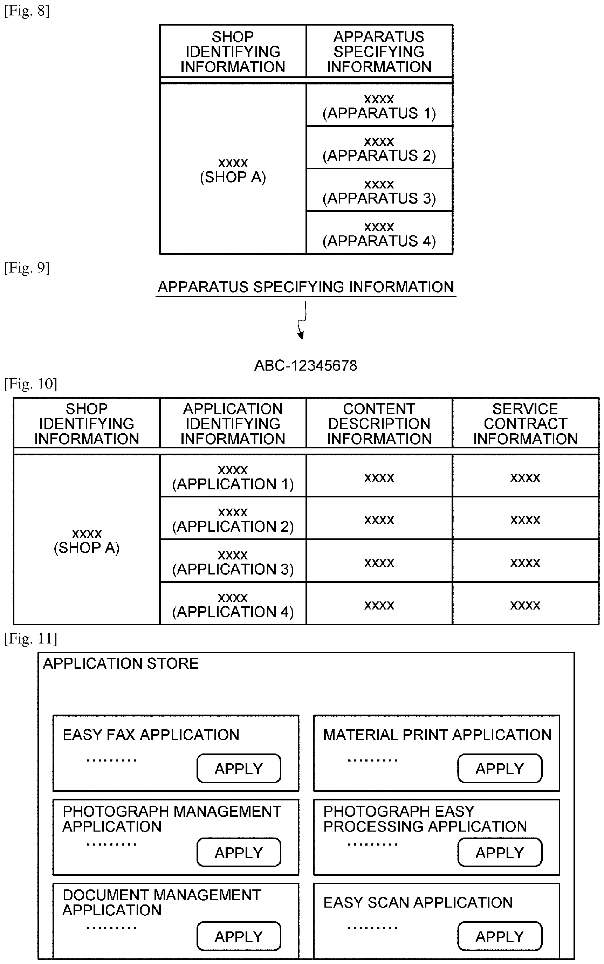

Based on second correspondence information in which each piece of shop identifying information is associated with a piece(s) of the apparatus specifying information, the second specifying unit 501 specifies the shop identifying information that is associated with the apparatus specifying information obtained by the obtaining unit 211. FIG. 8 is a diagram of an example of second correspondence information according to the present embodiment. In the example in FIG. 8, a piece of shop identifying information that identifies a "shop A" is associated with four pieces of apparatus specifying information, i.e., a piece of apparatus specifying information which uniquely specifies an "apparatus 1", a piece of apparatus specifying information which uniquely specifies an "apparatus 2", a piece of apparatus specifying information which uniquely specifies an "apparatus 3", and a piece of apparatus specifying information which uniquely specifies an "apparatus 4".

In the example in FIG. 8, the second correspondence information is information in which a single piece of the shop identifying information is associated with four pieces of the apparatus specifying information corresponding to four apparatuses one to one sold by the shop identified according to the shop identifying information. However, the second correspondence information is not limited to this. For example, the second correspondence information can be information in which each of plural pieces of shop identifying information is associated with a piece(s) of apparatus specifying information for identifying an apparatus sold by a shop identified according to the corresponding shop identifying information. The second correspondence information is stored in advance in the second correspondence information storing unit 502.

In the present embodiment, when receiving the shop identifying information request from the application store server 2 (shop identifying information requesting unit 212), the second specifying unit 501 determines the apparatus specifying information added to the header of the received shop identifying information request. Then, the second specifying unit 501 refers to the second correspondence information stored in the second correspondence information storing unit 502 to thereby specify the shop identifying information that is associated with the apparatus specifying information added to the header of the shop identifying information request (which can be considered as the apparatus specifying information obtained by the obtaining unit 211). The second specifying unit 501 returns the specified shop identifying information as a response to the shop identifying information request.

For example, a case is assumed where the second correspondence information illustrated in FIG. 8 is stored in advance in the second correspondence information storing unit 502 and the apparatus specifying information which uniquely specifies the "apparatus 1" is the apparatus specifying information which uniquely specifies the MFP 1 and the apparatus specifying information which uniquely specifies the "apparatus 1 (MFP 1)" is added to the header of the shop identifying information request received from the application store server 2. In this case, the second specifying unit 501 refers to the second correspondence information illustrated in FIG. 8 to thereby specify the shop identifying information which identifies the "shop A" that is associated with the apparatus specifying information which uniquely specifies the "apparatus 1 (MFP 1)". Then, the second specifying unit 501 returns the shop identifying information which identifies the "shop A" as a response to the shop identifying information request.

FIG. 9 is a diagram of an example of the apparatus specifying information. In the example in FIG. 9, the apparatus specifying information includes 11-digit string. The upper three digits of the string ("ABC" in the example in FIG. 9) indicate information for identifying the kind of the apparatus (information indicating a device type such as the MFP and the projector), and the lower eight digits of the string ("12345678" in the example in FIG. 9) indicate an identification number which is individually allocated. A form of the apparatus specifying information is arbitrary and not limited to the above.

The apparatus management server 5 described above has a hardware configuration of a normal computer which includes a CPU, a ROM, a RAM, and the like. The function of the second specifying unit 501 is implemented by performing the computer program stored in the ROM and the like by the CPU; however, the implementation is not limited to this. Alternatively, the function of the second specifying unit 501 may be implemented by a dedicated hardware circuit (semiconductor integrated circuit and the like). The second correspondence information storing unit 502 is implemented, for example, by a ROM or a RAM.

The description returns to FIG. 6, and the description on the application store server 2 will be continued. Based on third correspondence information in which each piece of shop identifying information is associated with the application identifying information for identifying the application, the third specifying unit 213 specifies the application identifying information that is associated with the shop identifying information specified by the second specifying unit 501. FIG. 10 is a diagram of an example of third correspondence information according to the present embodiment. In the example in FIG. 10, the shop identifying information which identifies the "shop A" is associated with four combinations, i.e., a combination of application identifying information which identifies an "application 1", content description information of the "application 1", and service contract information of the "application 1"; a combination of application identifying information which identifies an "application 2", content description information of the "application 2", and service contract information of the "application 2"; a combination of application identifying information which identifies an "application 3", content description information of the "application 3", and service contract information of the "application 3"; and a combination of application identifying information which identifies an "application 4", content description information of the "application 4", and service contract information of the "application 4". The content description information and the service contract information can have a link form such as an HTML not a text content.

In the example illustrated in FIG. 10, the third correspondence information is information in which a single piece of the shop identifying information is associated with four pieces of the application identifying information corresponding to four applications (the number of applications can be arbitrarily changed) one to one which is available to the apparatus sold by the shop identified according to the shop identifying information. However, the third correspondence information is not limited to this. For example, the third correspondence information can be information in which each of plural pieces of shop identifying information is associated with a piece(s) of application identifying information for identifying an application available to an apparatus sold by a shop identified according to the corresponding shop identifying information. The third correspondence information is stored in advance in the third correspondence information storing unit 214.

In the present embodiment, when receiving the shop identifying information from the apparatus management server 5 as a response to the shop identifying information request, the shop identifying information requesting unit 212 requests the third specifying unit 213 to specify the application identifying information that is associated with the shop identifying information received from the apparatus management server 5 (which can be considered as the shop identifying information specified by the second specifying unit 501). The third specifying unit 213 which has received this request refers to the third correspondence information stored in the third correspondence information storing unit 214 to thereby specify the application identifying information that is associated with the shop identifying information received from the apparatus management server 5.

For example, a case is assumed where the third correspondence information illustrated in FIG. 10 is stored in advance in the third correspondence information storing unit 214 and the shop identifying information which identifies the "shop A" has been received from the apparatus management server 5 (when the shop identifying information which identifies the "shop A" has been specified by the second specifying unit 501). In this case, the third specifying unit 213 refers to the third correspondence information illustrated in FIG. 10 to thereby specify, as the application identifying information associated with the shop identifying information which identifies the "shop A", the application identifying information which identifies the "application 1", the application identifying information which identifies the "application 2", the application identifying information which identifies the "application 3", and the application identifying information which identifies the "application 4".

Herein, it can be considered that, by combining the second correspondence information managed by the apparatus management server 5 and the third correspondence information managed by the application store server 2, the information (corresponding to "first correspondence information" in claims) in which each piece of apparatus specifying information is associated with the application identifying information for identifying the application available to the apparatus specified according to the apparatus specifying information is configured. From the other perspective, in this example, it also can be considered that the information (corresponding to the "first correspondence information" in claims) in which each piece of apparatus specifying information is associated with the application identifying information for identifying the application available to the apparatus specified according to the apparatus specifying information includes the second correspondence information and the third correspondence information.

It can be considered that the function of specifying the application identifying information that is associated with the apparatus specifying information obtained by the obtaining unit 211 (corresponding to a "first specifying unit" in claims) can be implemented based on the first correspondence information in which each piece of apparatus specifying information is associated with the application identifying information for identifying the application available to the apparatus specified according to the apparatus specifying information, the first correspondence information being obtained by combining the second specifying unit 501 of the apparatus management server 5 and the third specifying unit 213 of the application store server 2. From the other perspective, in this example, it also can be considered that the function of specifying the application identifying information that is associated with the apparatus specifying information obtained by the obtaining unit 211 (corresponding to "first specifying unit" in claims) based on the first correspondence information is implemented by at least the second specifying unit 501 and the third specifying unit 213.

The description on FIG. 6 will be continued. The display controlling unit 215 performs control to display the application store 6 (in this example, corresponding to the "application list screen" in claims) to provide the application identified according to the application identifying information specified by the third specifying unit 213 on the MFP 1 (apparatus specified according to the apparatus specifying information obtained by the obtaining unit 211). In the present embodiment, the display controlling unit 215 generates the application store 6 in such a manner that an application(s) other than the application(s) specified by the third specifying unit 213 is not displayed. That is, the display controlling unit 215 generates the application store 6 so as to display only the application specified by the third specifying unit 213 as an application to be provided.

FIG. 11 is a diagram of an example of application store 6 in a case where the translation application has not been specified by the third specifying unit 213. Here, the translation application is an application which provides a translation service for translating generated PDF text information with a transparent text by performing OCR processing on image data read from a document and informing the user of the translation result. The translation application is an application configured on the assumption that the apparatus has an OCR function. For example, when the MFP 1 does not have the OCR function, the application identifying information which identifies the "translation application" cannot be associated with the shop identifying information which identifies the "shop A" which sells the MFP 1 in the third correspondence information. Therefore, when the obtaining unit 211 obtains the apparatus specifying information to uniquely specify the MFP 1 and the second specifying unit 501 specifies the shop identifying information that is associated with the apparatus specifying information (in this example, the shop identifying information which identifies the "shop A"), the third specifying unit 213 does not specify the application identifying information which identifies the "translation application" as the application identifying information that is associated with the shop identifying information specified by the second specifying unit 501 (the shop identifying information which identifies the "shop A").

The application store 6 is a Web page which displays a button to apply the service contract and download of the application for each application specified by the third specifying unit 213 ("apply" button in the example in FIG. 11). In the example in FIG. 11, a case is assumed where the third specifying unit 213 specifies pieces of application identifying information which respectively identify an easy FAX application, a material print application, a photograph management application, a photograph easy processing application, a document management application, and an easy scan application.

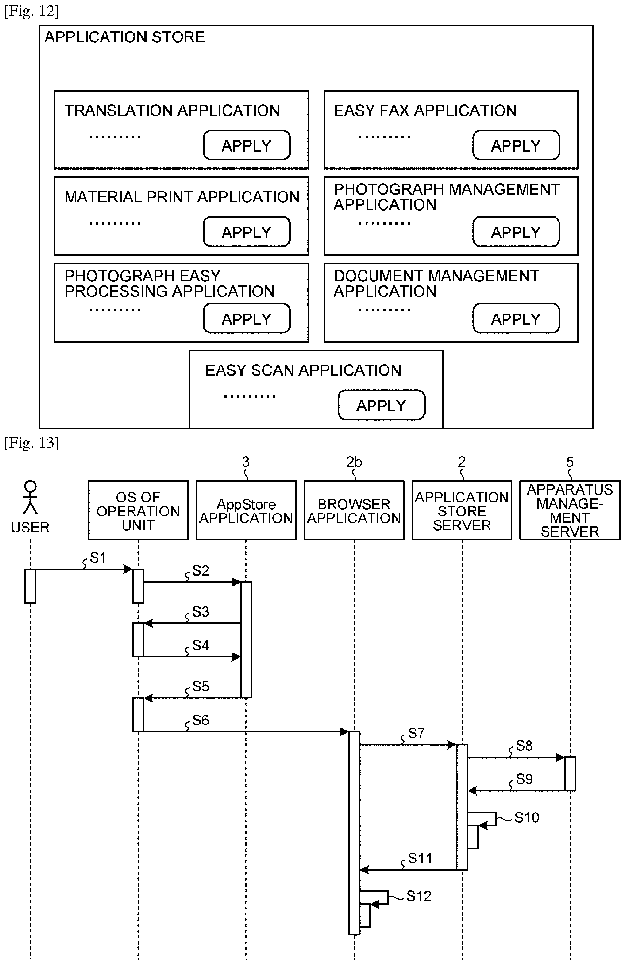

FIG. 12 is a diagram of an example of application store 6 in a case where the translation application is specified by the third specifying unit 213. For example, when the MFP 1 has the OCR function, the application identifying information which identifies the "translation application" is associated with the shop identifying information which identifies the "shop A" which sells the MFP 1 in the third correspondence information. Therefore, when the obtaining unit 211 obtains the apparatus specifying information which uniquely specifies the MFP 1 and the second specifying unit 501 specifies the shop identifying information associated with the apparatus specifying information (in this example, the shop identifying information which identifies the "shop A"), the third specifying unit 213 specifies the application identifying information which identifies the "translation application" as the application identifying information associated with the shop identifying information specified by the second specifying unit 501 (the shop identifying information which identifies the "shop A"). In the example in FIG. 12, a case is assumed where the third specifying unit 213 specifies pieces of the application identifying information which respectively identify the translation application, the easy FAX application, the material print application, the photograph management application, the photograph easy processing application, the document management application, and the easy scan application.

In the present embodiment, the display controlling unit 215 generates the application store 6 to provide the application identified according to the application identifying information specified by the third specifying unit 213 (that is, it can be considered as the application available to the MFP 1 which is a requester of the display request). The display controlling unit 215 returns the generated application store 6 as a response to the display request received from the MFP 1. The MFP 1 (application store display unit 113) which is a requester of the display request performs the control to display the application store 6, which is received from the application store server 2 as a response to the display request, on the operation panel 27. In the present embodiment, only the applications displayed on the application store 6 are available to the MFP 1 which is a requester of the display request. Therefore, even when the user presses any buttons to apply the service contract and download of the applications displayed on the application store 6 (in this example, "apply" button), the request is not refused. Therefore, the convenience of the user can be improved compared with a conventional one.

The MFP 1 (application usage controlling unit 114) which is a requester of the display request performs control to cause the MFP 1 to use the application selected by the user from among the applications displayed on the application store 6. As an example, a case is assumed where the application store 6 illustrated in FIG. 12 is displayed on the operation panel 27 of the MFP 1 and the user selects the translation application (in this example, press an "apply" button illustrated in FIG. 12). Here, it is assumed that the translation application be software (that is, a Web application) which can use the application arranged in the translation server 4 by using the browser application 2b of the operation unit 20. In this case, when detecting the depression of the "apply" button of the translation application, the application usage controlling unit 114 performs processing regarding a necessary procedure to use the translation application by accessing the translation server 4 without downloading the translation application from the translation server 4.

In the present embodiment, the translation application used to provide the translation service is a Web application. However, the translation application is not limited to this and, for example, may be a normal application to be installed to the operation unit 20. In this case, when detecting the depression of the "apply" button of the translation application, the application usage controlling unit 114 performs control to download the translation application from the translation server 4 and install it to the MFP 1. However, according to a configuration in which the translation application is the Web application, there is an advantage that it is not necessary to install the translation application to the MFP 1 (operation unit 20). Similarly, this can be applied to the other applications displayed on the application store 6. In addition, when the AppStore application 3 has a function to obtain the apparatus specifying information, it is not necessary for the AppStore application 3 to be an application installed to the MFP 1. The AppStore application 3 may be a Web application or may be an application of another form.

The application store server 2 described above has a hardware configuration of a normal computer which includes a CPU, a ROM, a RAM, and the like. Each function of the obtaining unit 211, the shop identifying information requesting unit 212, the third specifying unit 213, and the display controlling unit 215 is implemented by executing a computer program stored in the ROM and the like by the CPU. However, they are not limited to this. For example, at least a part of the functions of the obtaining unit 211, the shop identifying information requesting unit 212, the third specifying unit 213, and the display controlling unit 215 may be implemented by a dedicated hardware circuit (such as a semiconductor integrated circuit). The third correspondence information storing unit 214 is implemented, for example, by the ROM and the RAM.

FIG. 13 is a sequence diagram of an example of operation procedure of the information processing system 100 according to the present embodiment. First, when the user touches the icon 2a (refer to FIG. 5) on the operation screen (step S1), an OS of the operation unit 20 starts the AppStore application 3 (step S2). Next, the AppStore application 3 thus started requests the apparatus specifying information which can uniquely specify the MFP 1 for the OS of the operation unit 20 (step S3) and receives the apparatus specifying information from the OS of the operation unit 20 as a response to it (step S4). Next, the AppStore application 3 requests the OS of the operation unit 20 to start the browser application 2b which has been previously installed to the MFP 1 (step S5). The apparatus specifying information and the URL of the application store server 2 are added to this request, and the OS of the operation unit 20 which has received this request starts the browser application 2b. Then, the OS of the operation unit 20 transmits the apparatus specifying information and the URL of the application store server 2 to the browser application 2b and instructs the application store server 2 to transmit the display request (step S6).

The browser application 2b thus started accesses the URL of the application store server 2 and transmits the display request having the header to which the apparatus specifying information is added (step S7). The application store server 2 which has received the display request from the MFP 1 transmits the shop identifying information request to the apparatus management server 5. The shop identifying information request requests the shop identifying information associated with the apparatus specifying information which has been added to the header of the display request (step S8). As described above, the apparatus specifying information, which has been added to the header of the display request, is added to the header of the shop identifying information request. When receiving the shop identifying information request from the application store server 2, the apparatus management server 5 determines the apparatus specifying information added to the header. The apparatus management server 5 refers to the second correspondence information stored in the second correspondence information storing unit 502 to thereby specify the shop identifying information that is associated with the apparatus specifying information. Then, the apparatus management server 5 returns the specified shop identifying information as a response to the shop identifying information request (step S9).

The application store server 2, which has received the shop identifying information from the apparatus management server 5 as the response to the shop identifying information request, refers to the third correspondence information stored in the third correspondence information storing unit 214 to thereby specify the application identifying information associated with the shop identifying information received from the apparatus management server 5. Then, the application store server 2 generates the application store 6 to provide the application identified according to the specified application identifying information (step S10). Next, the application store server 2 returns the generated application store 6 as a response to the display request in step S7 (step S11). The browser application 2b of the MFP 1, which is a requester of the display request, performs control to display, on the operation panel 27, the application store 6 which has been received from the application store server 2 as the response to the display request (step S12).

As described above, according to the present embodiment, the applications displayed on the application store 6 provided from the application store server 2 to the MFP 1 are applications only available to the MFP 1. Therefore, even when the user presses any buttons to apply the service contract and download of the applications displayed on the application store 6 (in this example, "apply" button), the request is not refused. According to this, the convenience of the user can be improved.

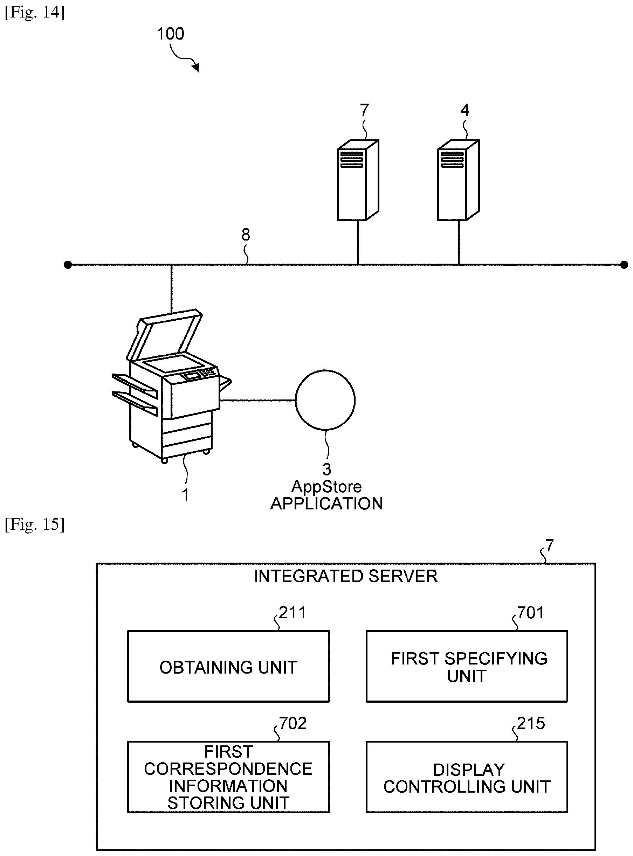

As illustrated in FIG. 14, a single server (integrated server 7) may be provided instead of the application store server 2 and the apparatus management server 5.

FIG. 15 is a block diagram of an example of function configuration of the integrated server 7. As illustrated in FIG. 15, the integrated server 7 includes the obtaining unit 211, a first specifying unit 701, a first correspondence information storing unit 702, and the display controlling unit 215. For convenience of description, FIG. 5 mainly illustrates the functions according to the present; however, the functions of the integrated server 7 are not limited to these.

The first specifying unit 701 specifies the application identifying information that is associated with the apparatus specifying information obtained by the obtaining unit 211, based on the first correspondence information in which each piece of apparatus specifying information is associated with the application identifying information for identifying the application available to the apparatus specified according to the apparatus specifying information.

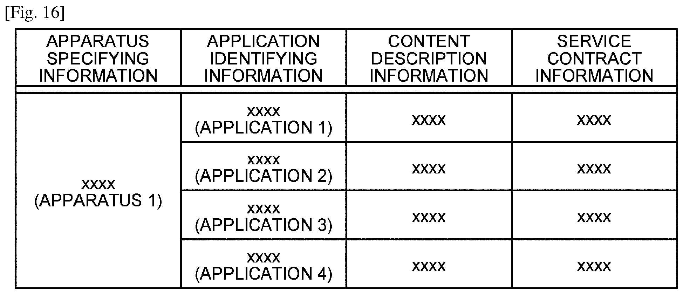

FIG. 16 is a diagram of an example of first correspondence information. In the example in FIG. 16, the apparatus specifying information which uniquely specifies the "apparatus 1" is associated with four combinations, i.e., a combination of the application identifying information which identifies the "application 1", the content description information of the "application 1", and the service contract information of the "application 1"; a combination of the application identifying information for identifying the "application 2", the content description information of the "application 2", and the service contract information of the "application 2"; a combination of the application identifying information for identifying the "application 3", the content description information of the "application 3", and the service contract information of the "application 3"; and a combination of the application identifying information for identifying the "application 4", the content description information of the "application 4", and the service contract information of the "application 4".

In the example in FIG. 16, the first correspondence information is information in which a single piece of the apparatus specifying information is associated with four pieces of application identifying information corresponding to four applications (the number of applications can be optionally changed) one to one available to the apparatus uniquely specified according to the apparatus specifying information. However, the first correspondence information is not limited to this. For example, the first correspondence information can be information in which each of plural pieces of apparatus specifying information is associated with a piece(s) of application identifying information for identifying an application available to an apparatus uniquely specified according to the apparatus specifying information. The first correspondence information is stored in advance in the first correspondence information storing unit 702.

In this example, when obtaining the display request from the MFP 1, the obtaining unit 211 requests the first specifying unit 701 for specifying the application identifying information associated with the apparatus specifying information added to the header of the display request (apparatus specifying information which uniquely specifies the MFP 1). The first specifying unit 701 which has received this request refers to the first correspondence information stored in the first correspondence information storing unit 702 to thereby specify the application identifying information associated with the apparatus specifying information obtained by the obtaining unit 211 (apparatus specifying information added to the header of the display request). The display controlling unit 215 performs control to display the application store 6 on the apparatus (in this example, the MFP 1 which is a requester of the display request) specified according to the apparatus specifying information obtained by the obtaining unit 211. The application store 6 is used to provide the application identified according to the application identifying information specified by the first specifying unit 701.

In short, the information processing system 100 to which the present invention is applied has includes at least the function of the obtaining unit 211, the function of the first specifying unit 701 (in the embodiment, the functions including those of the second specifying unit 501 and the third specifying unit 213), and the function of the display controlling unit 215. It can be considered that the integrated server 7 corresponds to an "information processing device" in claims. In short, the information processing device to which the present invention is applied includes at least the function of the obtaining unit 211, the function of the first specifying unit 701, and the function of the display controlling unit 215.

The respective functions of the units of the MFP 1 described above (the operation screen display unit 111, the application store requesting unit 112, the application store display unit 113, and the application usage controlling unit 114) are implemented by executing the computer program stored in a storage device (for example, a ROM 12, a HDD 14, a ROM 22, and a flash memory 24) by the CPU (11 or 21). However, the structure is not limited to this, and, for example, at least a part of the functions of the units of the MFP 1 may be implemented by a dedicated hardware circuit (for example, a semiconductor integrated circuit).

In the above-mentioned embodiment, the main body 10 and the operation unit 20 independently operate by using different operating systems. However, they are not limited to this, and for example, the main body 10 and the operation unit 20 may operate by using the same operating system.

The computer program executed by the information processing system 100 (such as the MFP 1, the application store server 2, and the apparatus management server 5) in the embodiment described above may be provided by recording it to a recording medium such as a CD-ROM, a flexible disk (FD), a CD-R, a digital versatile disk (DVD), and a universal serial bus (USB) which can be read by the computer by using a file in a format which can be installed or performed. The computer program may be provided or distributed via a network such as the Internet. Various computer programs may be provided by previously integrating it into the ROM and the like.

### Reference Signs List

1 MFP
2 Application store server
4 Translation server
5 Apparatus management server
6 Application store
7 Integrated server
10 Main body
20 Operation unit
100 Information processing system
111 Operation screen display unit
112 Application store requesting unit
113 Application store display unit
114 Application usage controlling unit
211 Obtaining unit
212 Shop identifying information requesting unit
213 Third specifying unit
214 Third correspondence information storing unit
215 Display controlling unit
501 Second specifying unit
502 Second correspondence information storing unit
701 First specifying unit
702 First correspondence information storing unit

### Citation List

### Patent Literature

PTL 1: Japanese Laid-open Patent Publication No. 2010-182309

## Claims

1. An information processing system (100) comprising:
an obtaining unit (211) configured to obtain a display request from an apparatus (1) included in the information processing system (100) and to obtain apparatus specifying information that uniquely specifies the apparatus as a requester of the display request from the display request, wherein the apparatus specifying information is added to the header of the display request;
a first specifying unit (701) configured to specify application identifying information associated with the apparatus specifying information obtained by the obtaining unit (211), based on first correspondence information in which each piece of apparatus specifying information is associated with application identifying information; and
a display controlling unit (215) configured to perform control to display an application list screen to provide the application identified according to the application identifying information specified by the first specifying unit (701) on the apparatus specified according to the apparatus specifying information obtained by the obtaining unit (211),
**characterized in that**
the first specifying unit (701) includes
a second specifying unit (501) configured to specify shop identifying information that is associated with the apparatus specifying information obtained by the obtaining unit (211), based on second correspondence information in which each piece of the shop identifying information for identifying a shop which sells the apparatus is associated with the apparatus specifying information; and
a third specifying unit (213) configured to specify application identifying information that is associated with the shop identifying information specified by the second specifying unit (501), based on third correspondence information in which the each piece of the shop identifying information is associated with the application identifying information,
wherein the application list screen is generated according to the application identifying information specified by the third specifying unit (213).

2. The information processing system (100) according to claim 1, wherein
the display controlling unit (215) generates the application list screen in such a manner that an application other than the application identified according to the application identifying information specified by the first specifying unit (701) are not displayed.

3. The information processing system (100) according to any one of claims 1 to 2, further comprising:
an application usage controlling unit (114) configured to perform control to cause the apparatus (1) to use an application selected by a user from among one or more applications displayed on the application list screen.

4. An information processing method comprising:
obtaining, by an obtaining unit (211), a display request from an apparatus (1) included in the information processing system (100) and apparatus specifying information that uniquely specifies the apparatus as a requester of the display request from the display request, wherein the apparatus specifying information is added to the header of the display request;
specifying, by a first specifying unit (701), application identifying information associated with the apparatus specifying information obtained by the obtaining unit (211), based on first correspondence information in which each piece of apparatus specifying information is associated with application identifying information; and
performing, by a display controlling unit (215), control to display an application list screen to provide the application identified according to the application identifying information specified by the specifying on the apparatus specified according to the apparatus specifying information obtained by the obtaining,
**characterized by**
specifying, by a second specifying unit (501), shop identifying information that is associated with the apparatus specifying information, based on second correspondence information in which each piece of the shop identifying information for identifying a shop which sells the apparatus is associated with the apparatus specifying information; and
specifying, by a third specifying unit (213), application identifying information that is associated with the shop identifying information, based on third correspondence information in which the each piece of the shop identifying information is associated with the application identifying information, wherein the first specifying unit (701) includes the second specifying unit (501) and the third specifying unit (213), and the application list screen is generated according to the application identifying information specified by the third specifying unit (213).

## Patentansprüche

1. Informationsverarbeitungssystem (100), mit:
einer erhaltenden Einheit (211), die konfiguriert ist, um eine Anzeigeanforderung von einer Vorrichtung (1) zu erhalten, die in dem Informationsverarbeitungssystem (100) enthalten ist, und um vorrichtungsspezifizierende Informationen zu erhalten, die die Vorrichtung eindeutig als Anforderer der Anzeigeanforderung von der Anzeigeanforderung spezifizieren; wobei die vorrichtungsspezifizierenden Informationen dem Header der Anzeigeanforderung hinzugefügt werden;
einer ersten spezifizierende Einheit (701), die konfiguriert ist, um anwendungsidentifizierende Informationen zu spezifizieren, die den vorrichtungsspezifizierenden Informationen zugeordnet sind, die von der erhaltenen Einheit (211) erhalten werden, basierend auf ersten Korrespondenzinformationen, in denen jeder Teil der gerätespezifizierenden Informationen anwendungsidentifizierenden Informationen zugeordnet ist; und
einer Anzeigesteuereinheit (215), die konfiguriert ist, um eine Steuerung durchzuführen, um eine Anwendungslistenanzeige anzuzeigen, um die Anwendung bereitzustellen, die gemäß den anwendungsidentifizierenden Informationen identifiziert wurde, die durch die erste spezifizierende Einheit (701) spezifiziert wurden, an der Vorrichtung, die gemäß den vorrichtungsspezifizierenden Informationen spezifiziert wurde, die durch die erhaltende Einheit (211) erhalten wurden,
**dadurch gekennzeichnet, dass**
die erste spezifizierende Einheit (701) unfasst:
eine zweite spezifizierende Einheit (501), die konfiguriert ist, um Geschäfts-Identifizierungsinformationen zu spezifizieren, die den vorrichtungsspezifizierenden Informationen zugeordnet sind, die von der erhaltenen Einheit (211) erhalten werden, basierend auf zweiten Korrespondenzinformationen, in denen jeder Teil der Geschäfts-Identifikationsinformationen zum Identifizieren eines die Vorrichtung verkaufenden Geschäfts, den vorrichtungsspezifizierenden Informationen zugeordnet ist; und
eine dritte spezifizierende Einheit (213), die konfiguriert ist, um anwendungsidentifizierende Informationen zu spezifizieren, die den Geschäfts-identifikationsinformationen zugeordnet sind, die durch die zweite spezifizierende Einheit (501) spezifiziert sind, basierend auf dritten Korrespondenzinformationen, in denen jeder Teil der Geschäfts-Identifikationsinformationen den anwendungsidentifizierenden Informationen zugeordnet ist,
wobei die Anwendungslistenanzeige gemäß den anwendungsidentifizierenden Informationen erzeugt wird, die von der dritten spezifizierenden Einheit (213) spezifiziert wurden.

2. Informationsverarbeitungssystem (100) nach Anspruch 1, wobei
die Anzeigesteuereinheit (215) die Anwendungslistenanzeige derart erzeugt, dass eine andere Anwendung als die Anwendung, die gemäß den durch die erste spezifizierende Einheit (701) spezifizierten anwendungsidentifizierenden Informationen identifiziert wurde, nicht angezeigt wird.

3. Informationsverarbeitungssystem (100) nach einem der Ansprüche 1 bis 2, das ferner umfasst:
eine Anwendungsnutzungssteuereinheit (114), die konfiguriert ist, um eine Steuerung durchzuführen, um zu bewirken, dass die Vorrichtung (1) eine Anwendung verwendet, die von einem Benutzer aus einer oder mehreren Anwendungen ausgewählt wurde, die auf der Anwendungslistenanzeige angezeigt werden.

4. Informationsverarbeitungsverfahren, welches umfasst:
das Erhalten einer Anzeigeanforderung durch eine erhaltende Einheit (211), von einer Vorrichtung (1), die in dem Informationsverarbeitungssystem (100) enthalten ist, und von vorrichtungsspezifizierenden Informationen, die die Vorrichtung eindeutig als Anforderer der Anzeigeanforderung von der Anzeigeanforderung spezifizieren, wobei die vorrichtungsspezifizierenden Informationen dem Header der Anzeigeanforderung hinzugefügt werden,
das Spezifizieren, durch eine erste spezifizierende Einheit (701), von anwendungsidentifizierenden Informationen, die den vorrichtungsspezifizierenden Informationen zugeordnet sind, die von der erhaltenen Einheit (211) erhalten wurden, basierend auf ersten Korrespondenzinformationen, in denen jeder Teil der vorrichtungsspezifizierenden Informationen, anwendungsidentifizierenden Informationen zugeordnet ist; und
das Ausführen einer Steuerung zum Anzeigen einer Anwendungslistenanzeige durch eine Anzeigesteuereinheit (215), um die Anwendung bereitzustellen, die gemäß den anwendungsidentifizierenden Informationen identifiziert wurde, die durch die vorrichtungsspezifizierenden Informationen spezifiziert wird, an der Vorrichtung, die gemäß den vorrichtungsspezifizierenden Informationen spezifiziert wurde, die durch die erhaltende Einheit (211) erhalten wurden,
**gekennzeichnet durch**
das Spezifizieren von Geschäfts-Identifizierungsinformationen durch eine zweite spezifizierende Einheit (501), die den vorrichtungsspezifizierenden Informationen zugeordnet sind, basierend auf zweiten Korrespondenzinformationen, in denen jeder Teil der Geschäfts-Identifikationsinformationen zum Identifizieren eines die Vorrichtung verkaufenden Geschäfts, den vorrichtungsspezifizierenden Informationen zugeordnet ist; und
das Spezifizieren, durch eine dritte spezifizierende Einheit (213), von anwendungsidentifizierenden Informationen, die den Geschäfts-Identifikationsinformationen zugeordnet sind, basierend auf dritten Korrespondenzinformationen, in denen jeder Teil der Geschäfts-Identifikationsinformationen den anwendungsidentifizierenden Informationen zugeordnet ist,
wobei die erste spezifizierende Einheit (701) die zweite spezifizierende Einheit (501) und die dritte spezifizierende Einheit (213) umfasst, und die Anwendungslistenanzeige gemäß den anwendungsidentifizierenden Informationen erzeugt wird, die von der dritten spezifizierenden Einheit (213) spezifiziert wurden.

## Revendications

1. Système de traitement d'informations (100), comprenant :
une unité d'obtention (211) configurée pour obtenir une demande d'affichage à partir d'un appareil (1) inclus dans le système de traitement d'informations (100) et pour obtenir des informations de spécification d'appareil, qui spécifient de façon unique l'appareil en tant que demandeur de la demande d'affichage, à partir de la demande d'affichage, dans lequel les informations de spécification d'appareil sont ajoutées à l'en-tête de la demande d'affichage ;
une première unité de spécification (701) configurée pour spécifier des informations d'identification d'application associées aux informations de spécification d'appareil obtenues par l'unité d'obtention (211), sur la base de premières informations de correspondance dans lesquelles chaque élément d'informations de spécification d'appareil est associé à des informations d'identification d'application ; et
une unité de commande d'affichage (215) configurée pour réaliser une commande pour afficher un écran de liste d'applications pour fournir l'application identifiée selon les informations d'identification d'application spécifiées par la première unité de spécification (701) sur l'appareil spécifié selon les informations de spécification d'appareil obtenues par l'unité d'obtention (211),
**caractérisé en ce que**
la première unité de spécification (701) inclut
une deuxième unité de spécification (501) configurée pour spécifier des informations d'identification de magasin qui sont associées aux informations de spécification d'appareil obtenues par l'unité d'obtention (211), sur la base de deuxièmes informations de correspondance dans lesquelles chaque élément des informations d'identification de magasin pour identifier un magasin qui vend l'appareil est associé aux informations de spécification d'appareil ; et
une troisième unité de spécification (213) configurée pour spécifier des informations d'identification d'application qui sont associées aux informations d'identification de magasin spécifiées par la deuxième unité de spécification (501), sur la base de troisièmes informations de correspondance dans lesquelles chaque élément des informations d'identification de magasin est associé aux informations d'identification d'application,
dans lequel l'écran de liste d'applications est généré selon les informations d'identification d'application spécifiées par la troisième unité de spécification (213).

2. Système de traitement d'informations (100) selon la revendication 1, dans lequel
l'unité de commande d'affichage (215) génère l'écran de liste d'applications de manière telle qu'une application autre que l'application identifiée selon les informations d'identification d'application spécifiées par la première unité de spécification (701) ne soient pas affichées.

3. Système de traitement d'informations (100) selon l'une quelconque des revendications 1 à 2, comprenant en outre :
une unité de commande d'usage d'application (114) configurée pour réaliser une commande pour faire en sorte que l'appareil (1) utilise une application sélectionnée par un utilisateur parmi une ou plusieurs applications affichées sur l'écran de liste d'applications.

4. Procédé de traitement d'informations, comprenant :
l'obtention, par une unité d'obtention (211), d'une demande d'affichage à partir d'un appareil (1) inclus dans le système de traitement d'informations (100) et d'informations de spécification d'appareil, qui spécifient de façon unique l'appareil en tant que demandeur de la demande d'affichage, à partir de la demande d'affichage, dans lequel les informations de spécification d'appareil sont ajoutées à l'en-tête de la demande d'affichage ;
la spécification, par une première unité de spécification (701), d'informations d'identification d'application associées aux informations de spécification d'appareil obtenues par l'unité d'obtention (211), sur la base de premières informations de correspondance dans lesquelles chaque élément d'informations de spécification d'appareil est associé à des informations d'identification d'application ; et
la réalisation, par une unité de commande d'affichage (215), d'une commande pour afficher un écran de liste d'applications pour fournir l'application identifiée selon les informations d'identification d'application spécifiées par la spécification sur l'appareil spécifié selon les informations de spécification d'appareil obtenues par l'obtention,
**caractérisé par**
la spécification, par une deuxième unité de spécification (501), d'informations d'identification de magasin qui sont associées aux informations de spécification d'appareil, sur la base de deuxièmes informations de correspondance dans lesquelles chaque élément des informations d'identification de magasin pour identifier un magasin qui vend l'appareil est associé aux informations de spécification d'appareil ; et
la spécification, par une troisième unité de spécification (213), d'informations d'identification d'application qui sont associées aux informations d'identification de magasin, sur la base de troisièmes informations de correspondance dans lesquelles chaque élément des informations d'identification de magasin est associé aux informations d'identification d'application, dans lequel la première unité de spécification (701) inclut la deuxième unité de spécification (501) et la troisième unité de spécification (213), et l'écran de liste d'applications est généré selon les informations d'identification d'application spécifiées par la troisième unité de spécification (213).
